# EUROPÄISCHE PATENTANMELDUNG

(11) **EP 0 677 305 A1**
(43) Veröffentlichungstag der Anmeldung: **18.10.1995**
(21) Anmeldenummer: 95103448.7
(22) Anmeldetag: 10.03.1995
(51) Int. Cl.: A62D 3/00, C09K 3/32

(54) **Verfahren zum Verhindern der Bildung von SO3-Nebeln aus Oleum**

(30) Priorität: 13.04.1994 DE 4412633
(71) Anmelder: Degussa Aktiengesellschaft, D-60311 Frankfurt (DE)
(72) Erfinder: Soicke, Hartwig, Dr., D-51491 Overath (DE); Mannebach, Georg, D-50354 Hürth (DE)

(57) **Zusammenfassung**

Die Bildung von SO₃-Nebeln aus Oleum wird verhindert, indem man das Oleum mit einem natürlichen Silikat abdeckt.

## Beschreibung

Die Erfindung betrifft ein Verfahren zum Verhindern der Bildung von SO₃-Nebeln aus Oleum.

Schwefelsäure und Oleum sind klare, farblose, bei technischen Qualitäten auch leicht trübe, ölige Flüssigkeiten. Während Schwefelsäure geruchlos ist, entwickelt Oleum an der Luft weiße Nebel.

Die physikalischen Eigenschaften der verschiedenen Konzentrationen unterscheiden sich zum Teil beträchtlich. Die Handelskonzentrationen (Schwefelsäure 78, 96 %; Oleum 20, 27, 65 %) ergeben sich zwangsläufig aus der Erstarrungspunktkurve des Systemes SO₃/H₂O, die jeweils bei diesen Konzentrationen Minima aufweist. Den Maxima entsprechen definierte Verbindungen von SO₃ mit H₂O (zum Beispiel H₂SO₄ · H₂O, H₂S₂O₇).

Lösungen von SO₃ in Schwefelsäure-Oleum oder rauchende Schwefelsäure haben bereits bei normalen Temperaturen einen beträchtlichen SO₃-Dampfdruck.

Schwefelsäure ist eine starke Säure. Konzentrierte Säure und vor allem Oleum sind besonders bei erhöhten Temperaturen oxidierend. Die Säure ist hygroskopisch. Da bei der Mischung mit Wasser eine recht bedeutende Wärmemenge (85,5 kJ/Mol H₂SO₄ bei Vermischung mit Wasser bei 20 °C) frei wird, kann die Reaktion explosionsartig sein. Oleum bildet darüber hinaus mit Wasser dichte Nebel. Die wasserentziehende Wirkung verursacht auf der Haut starke, schwer heilende Brandwunden. Holz und manche organische Stoffe werden zu Kohle zersetzt.

Zur Handhabung von Schwefelsäure oder Oleum aller Konzentrationen, besonders wenn Verunreinigungen durch Fremdionen vermieden werden sollen, werden Glas, Email oder keramische Materialien (Porzellan) eingesetzt. Bei Verwendung von Metallen, Kunststoffen oder Gummi bestehen starke Abhängigkeiten von Temperatur und Konzentration der Säure. Für verdünnte Säuren bis etwa 85 % kann Blei als Werkstoff verwendet werden, das durch PbSO₄-Schicht geschützt wird. Andere Metalle, auch Eisen und Stähle, werden von dünnen Säuren angegriffen.

Für konzentrierte Säuren sind Grauguß, Si-Guß, Stahl, wenn man eine gewisse Abtragung in Kauf nimmt, oder besondere Stähle (zum Beispiel WSt.-Nr. 1.4541 oder 1.4571) geeignete Werkstoffe. Bei Oleum kann Grauguß nicht eingesetzt werden, da infolge der Oxidation des Kohlenstoffs das Material stark korrodiert wird.

Gummierte Apparate oder Leitungen sind für Säuren bis etwa 70 % Konzentration verwendbar. Man wird jedoch heute im allgemeinen in diesem Bereich auf PVC, Polypropylen oder Polyethylen zurückgreifen, die sogar für kalte Schwefelsäure eingesetzt werden können. Die fluorierten Kunststoffe PTFE oder FEP eignen sich für alle Konzentrationen, auch Oleum.

Schwefelsäure und Oleum verursachen schwere Hautverätzungen und Gewebezerstörungen. Besonders gefährdet sind die Augen! Schwefelsäure- und/oder Oleum-haltige Dämpfe oder Nebel führen zu schweren Reizungen der Augen, der Haut, der Atemwege und der Lunge.

Beim Arbeiten mit Schwefelsäure und Oleum ist grundsätzlich eine Schutzausrüstung zu tragen, bestehend aus säurefestem Arbeitsanzug und Schutzbrille. Bei Arbeiten, bei denen ein direkter Kontakt mit Schwefelsäure und Oleum möglich ist, sind zusätzliche Schutzausrüstungen zu benutzen, zum Beispiel Gesichtsschild, Gummihandschuhe, Vollschutz auf PVC-Basis, schwerer Atemschutz. Bei Auftreten von Schwefelsäure oder Oleumhaltigen Dämpfen oder Nebeln müssen Atemschutzgeräte mit Partikelschutzfilter P2 verwendet werden, zum Beispiel eine Vollschutzmaske mit Filter ABEK P2 der Fa. Dräger.

Der Wert der maximalen Arbeitsplatzkonzentration (MAK-Wert) (1984) beträgt:
Schwefelsäure 1 mg/m³ ≙ 0,245 ppm
Geruchsschwelle:
Schwefelsäure 0,6 mg/m³

Bei dem Arbeiten mit Oleum gelten die Merkblätter der Berufsgenossenschaft: M004-Merkblatt "Reizende Stoffe/Ätzende Stoffe" (Ausgabe 11/83); M051-Merkblatt "Gefährliche chemische Stoffe" (Ausgabe 4/84); T015-Merkblatt über das Entleeren von Säuren und Laugen aus Eisenbahnkesselwagen (Ausgabe 71).

Das Verdünnen von Schwefelsäure mit Wasser ist ausschließlich so auszuführen, daß die Säure langsam ins Wasser einläuft. Nie umgekehrt! Auf Verdünnungswärme achten!

Die offene Handhabung aller Oleum-Sorten oder der Kontakt von Oleum mit feuchter Luft führen grundsätzlich zu einer Bildung feiner Schwefelsäure- oder Oleum-Nebel. Diese sind unter allen Umständen zu vermeiden. Eine wirkungsvolle Abscheidung solcher Nebel gelingt nur an Faserfiltern. Eine Beatmung von Behältern oder Tanks sollte über einen Schwefelsäurewäscher nebst Faserfilter abgesichert sein.

Auslaufende oder verschüttete Säure und Oleum müssen soweit als möglich aufgefangen werden. Ein Abdecken mit saugfähigem Material, wie trockener Erde oder Sand ist möglich. Mit Soda, Kalk oder Asche kann man zwar Schwefelsäure neutralisieren, Oleum reagiert mit diesen Stoffen jedoch extrem exotherm, wobei eine erhöhte Verdampfung von SO₃ erfolgt. Nur kleinere Säuremengen kann man mit Wasser wegspülen!

Tücher, Sägemehl oder anderes organisches Material können nicht zum Aufwischen oder Aufsaugen von Oleum oder konzentrierter Schwefelsäure verwendet werden.

Aufgrund der starken Nebelbildung durch die Freisetzung von SO₃-Nebeln besteht die Notwendigkeit, ausgelaufenes Oleum möglichst schnell zu neutralisieren bzw. ein Mittel, welches die SO₃-Verbreitung verhindert, einzusetzen.

Es ist bekannt, ausgelaufenes Oleum mit Sand zu bedecken. Sand hat jedoch den Nachteil, daß er sofort in dem Oleum versinkt und dabei die Oberfläche freimacht. Eine weitere SO₃-Bildung ist dann wieder möglich. Von Nachteil ist weiterhin, daß das Oleum nicht neutralisiert wird

Es ist weiterhin bekannt, Oleum mit einem Weißöl (zum Beispiel Winog 70) abzudecken. Diese Methode hat jedoch den Nachteil, daß eine Entsorgung nur durch Absaugung möglich ist. Ferner ist diese Methode nur bedingt bei 30 bis 40 %igem Oleum einsetzbar, weil mit höherer Konzentration des Oleums die Zersetzung der organischen Komponente so rasch verläuft, daß ein ausreichendes Abdecken nicht erreicht wird.

Es besteht somit die Aufgabe, ein Verfahren zu finden, mit dem die Bildung von SO₃-Nebeln wirksam verhindert und eine problemlose Entsorgung des Oleums möglich ist.

Gegenstand der Erfindung ist ein Verfahren zum Verhindern der Bildung von SO₃-Nebeln aus Oleum, welches dadurch gekennzeichnet ist, daß man das Oleum mit einem natürlichen Silikat mit Ausnahme von Sand, welches gegebenenfalls eine synthetische Kieselsäure in einer Menge von 1 bis 20 Gew.-% enthält, abdeckt.

Die Menge an synthetischer Kieselsäure, die gegebenenfalls hydrophobiert sein kann, kann in einer bevorzugten Ausführungsform der Erfindung 3 bis 10 Gew.-% betragen.

Als synthetische Kieselsäure kann eine pyrogen hergestellte oder eine gefällte Kieselsäure eingesetzt werden.

Als natürliches Silikat können Silikate mit Schicht- und/oder Bandstruktur, wie zum Beispiel Talkum, eingesetzt werden. Insbesondere können Talkum oder Glimmer, bevorzugt Talkum, eingesetzt werden. Bei der Verwendung von Talkum hat sich vorteilhafterweise gezeigt, daß nicht nur die Oberfläche des Oleums abgedeckt werden, sondern auch die saure Eigenschaft des Oleums neutralisiert werden kann. Talkum hat den Vorteil, daß es einen alkalischen pH-Wert von ca. 9,3 aufweist. Aufgrund seiner feinpulvrigen Struktur sinkt es nur sehr langsam in dem Oleum ab. Es besteht dabei ausrechend Zeit für eine Reaktion des Oleums mit OH-Gruppen des Talkums.

Der Zusatz von synthetischer Kieselsäure zu dem Silikat bewirkt, daß die Fließfähigkeit des Talkums verbessert wird. Die Menge des Silikates im Verhältnis zu dem Oleum kann 1 : 1 bis 3 : 1 betragen. Eine größere Menge an Silikat ist nicht von Nachteil. Die Mindestmenge an Silikat sollte aber ausreichend für die vollständige Abdeckung des Oleums sein.

Nach Abdeckung des Oleums mit dem Silikat kann man die Mischung ca. 1 bis 2 Tage ruhen bzw. langsam weiter reagieren lassen. Die Restsäure kann anschließend durch Zusatz von Kalkmilch, Na₂CO₃ oder verdünnte Natronlauge relativ gefahrlos neutralisiert werden.

Die Zugabe des Silikates kann mit einer bekannten Vorrichtung zur Bekämpfung von Metallbrand erfolgen.

### Beispiele

Die Versuche werden mit 2 Arten von Pulverlöschern durchgeführt:
1. ABC Löscher gefüllt mit 6 kg Talkum
2. Metallbrandlöscher mit Applikator gefüllt mit 6 kg Talkum mit einem Zusatz von 5 % Sipernat 22.

Es werden 3 Versuche mit unterschiedlichen Mengen Oleum durchgeführt.

Die Versuche zeigen, daß der ABC Löscher gefüllt mit Talkum nicht geeignet ist. Das Talkum tritt unter zu hohem Druck aus. Dies führt zu einer starken Staubentwicklung. Bedingt durch den hohen Druck kann das Talkum nicht gezielt auf das Oleum gebracht werden. Dagegen sind die Versuche mit dem Metallbrandlöscher zufriedenstellend. Durch den geringen Druck in dem Löscher kann das Oleum in kurzer Zeit (ca. 1 bis 2 Minuten) gut abgedeckt werden.

### 1. Versuch

500 g Oleum werden in eine Wanne (Abmessung 30*40 cm) geschüttet. Die Abdeckung wird mit einem ABC Löscher durchgeführt. Die Abdeckung ist unzureichend, weil das Talkum mit zu hohem Druck verteilt wird. Der hohe Druck führt zu einer starken Staubentwicklung.

### 2. Versuch

1000 g Oleum werden in eine Wanne (Abmessung 30*40 cm) geschüttet. Die Abdeckung wird mit einem Metallbrandlöscher mit Applikator durchgeführt. Nach ca. 3 Minuten sind an der Oberfläche nur vereinzelt SO₃-Nebel wahrnehmbar. Diese Stellen werden gezielt mit Talkum abgedeckt. Der Metallbrandlöscher ist mit Talkumzusatz 5 % Sipernat 22 gefüllt.

### 3. Versuch

1000 g Oleum werden in eine Wanne (Abmessung 30*40 cm) gschüttet. Anschließend erfolgt die Abdeckung mit einem Metallbrandlöscher mit Applikator. Nach ca. 1 bis 2 Minuten wird an der Oberfläche nur vereinzelt SO₃-Nebel wahrnehmbar. Diese Stellen werden gezielt mit Talkum abgedeckt. Der Inhalt des Metallbrandlöschers ist der gleiche wie in Versuch 2.

### 4. Versuch

100 g Oleum wurden mit 125 g Talkum Zusatz von 5 % Sipernat D 17 abgedeckt. Nach ∼ 10 Sekunden keine SO₃-Nebel wahrnehmbar. Nach 10 Minuten war eine Durchmischung Oleum-Talkum zu beobachten. Keine SO₃-Nebel. 80 cm².

### 5. Versuch

100 g Oleum wurden mit 150 g Talkum Zusatz von 5 % Sipernat 22 S abgedeckt. Nach ∼ 10 Sekunden keine SO₃-Nebel wahrnehmbar. Nach 10 Minuten 80 cm².

### 6. Versuch

200 g Oleum wurden mit 280 g Talkum Zusatz 5 % Sipernat 22 S abgedeckt. Nach ∼ 10 Sekunden keine SO₃-Nebel wahrnehmbar. Das Oleum wurde über eine Fläche von ∼ 1200 cm² verteilt.

### 7. Versuch

200 g Oleum wurden mit 370 g Talkum Zusatz 5 % Sipernat D 17 abgedeckt. Nach ∼ 10 Sekunden keine SO₃-Nebel wahrnehmbar. Das Oleum wurde über eine Fläche von ∼ 1200 cm² verteilt.

Die eingesetzten Kieselsäuren Sipernat D 17, 22 S und 22 sind gefällte Kieselsäuren.

## Patentansprüche

1. Verfahren zum Verhindern der Bildung von SO₃-Nebeln aus Oleum, dadurch gekennzeichnet, daß man das Oleum mit einem natürlichen Silikat mit Ausnahme von Sand abdeckt.
